# EUROPEAN PATENT SPECIFICATION

(11) **EP 1 297 984 B1**
(45) Date of publication and mention of the grant of the patent: **13.04.2005**
(21) Application number: 02020984.7
(22) Date of filing: 20.09.2002
(51) Int. Cl.: B60K 15/04, B60K 15/035

(54) **Controlling fuel tank vapor venting during refueling**
Kontrolle der Belüftung des Brandstofftanks während der Betankung
Contrôle de l'évacuation des vapeurs d'un réservoir de carburant au cours de son ravitaillement

(30) Priority: 26.09.2001 US 963815
(43) Date of publication of application: 02.04.2003
(73) Proprietor: EATON CORPORATION, Cleveland, Ohio 44114-2584 (US)
(72) Inventor: Benjey, Robert P., Dexter, Michigan 48130-9311 (US)
(74) Representative: Patentanwälte Rüger, Barthelt & Abel

(56) References cited:
- US-A- 5 570 672
- US-A- 5 590 697
- US-A- 5 950 655
- US-A- 6 009 920

## Description

### BACKGROUND OF THE INVENTION

The present invention relates to systems for providing controlled venting and preventing escape to the atmosphere of fuel vapor from a fuel tank, particularly on board a motor vehicle, and more particularly during refueling.

Currently, production motor vehicles operating on gasoline or other highly volatile fuel, employ a storage unit, typically a remotely located canister charged with charcoal, connected to receive fuel vapor from a float operated vent valve provided on the fuel tank. During periods of engine shutdown vapor is adsorbed in the canister and stored. Upon startup of the engine, the canister is purged by air and the fuel vapors are drawn from the canister into the engine inlet and comprise a portion of the engine combustion charge.

When the engine is not operating, the canister must absorb all of the vapor from the fuel tank which is either displaced from the tank through vent valve by the rising fuel level during refueling, or from the tank when the vapor pressure rises above atmospheric.

When the fuel tank filler neck is open for refueling by insertion of a fuel filler nozzle, and fuel is flowing from the nozzle into the filler neck, it is desired to prevent escape of the fuel vapor from the tank through the filler neck and thus bypassing the vent valve to the storage canister. Heretofore, this problem has been addressed by providing a mechanical seal in the filler neck for sealing about the filler nozzle. In such an arrangement a recirculation line has been connected from the fuel tank upper wall to the filler neck below the nozzle seal.

Referring to FIGS. 3 and 4, a system *of a type disclosed in US-A-5,950,635 and* of the above-described type is illustrated and has the fuel tank 1 with a filler neck 2 receiving fuel during refueling by a filler nozzle 3 inserted into the upper end 2a of the filler neck through a seal 4 and sufficiently further to open a one-way flapper valve 5 and permit the nozzle to discharge into the filler neck 2.

A pressure relief valve 6 is provided in the filler neck upper end 2a and serves as a bypass for the seal 4 in the event of a failure of the aspirator controlled automatic shutoff in the refueling nozzle 3.

A float operated vent valve 7 is received through an aperture in the upper wall of the tank and has a flange 8 registering against the exterior of the upper tank wall; and, the valve flange is secured to the upper tank wall. The valve 7 has its outlet connected to a vapor vent conduit 9 which is connected to a storage canister 10 which has an outlet line 11 adapted for connection to an engine air inlet (not shown). Typically, the canister 10 has an atmospheric purge air inlet 12 for permitting air to be drawn in the canister upon engine startup and creation of a vacuum in the line 11. Vacuum in the canister is created by the flow restriction of the granular fill in the canister.

Air leakage past the mechanical seal 4 in the tube around the refueling nozzle causes increased vaporization of fuel in the tank and the canister is subjected to increased vapor flow from the tank. This results in the requirement for additional canister capacity.

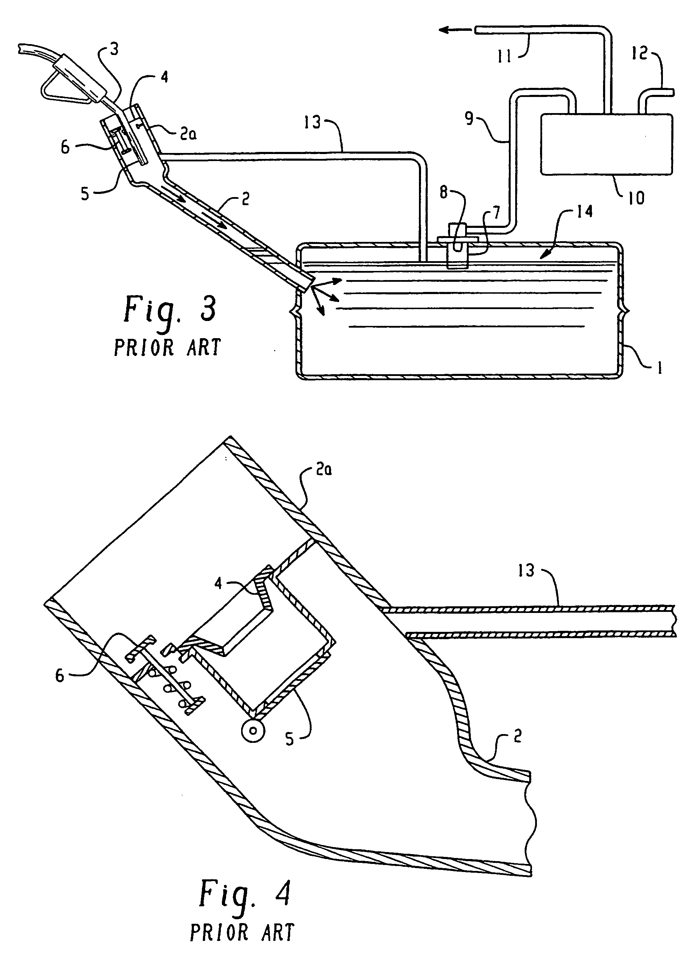

A recirculation line 13 has one end connected to the upper end of filler neck 2a below the seal 4. The remaining end of the conduit 13 is connected to the upper wall of the tank 1 and extends to a desired liquid fill level within the tank and is closed by the rising level of the fuel in the tank as indicated generally by reference numeral 14 in FIG. 3.

The system of FIGS. 3 and 4 permits fuel vapor to be recirculated through the filler nozzle until the fuel level 14 closes off the end of the tube 13 within the tank. Closure of tube 13 causes continued fuel flow through the nozzle to create a vacuum within upper tube 2a below seal 4, which vacuum starves the nozzle aspirator and effects nozzle shutoff.

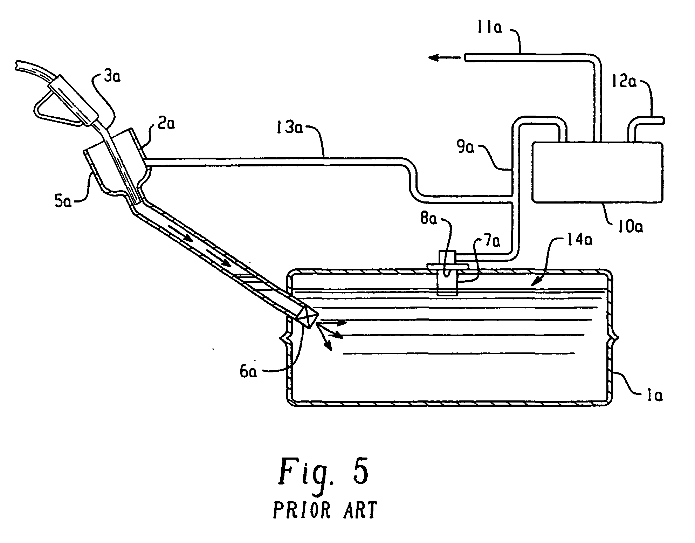

Referring to FIG. 5, another system of the prior art is illustrated pictorially where a fuel tank 1a has a filler tube 4a with an enlarged cup-shaped upper end portion 5a shown with refueling nozzle 3a received therein and having the end thereof inserted in closely fitting arrangement in the upper end of the filler tube 4a. The lower end of the filler tube 4a extends into the fuel tank and has a one-way valve 6a provided thereon to permit fuel to enter the tank but not filler neck 4a. The tank has a float operated vent valve 7a provided in the top thereof and registered thereagainst by flange 8a with the valve 7a extending through an access opening into the tank for sensing the fuel level indicated generally at 14a.

Valve 7a has conduit 9a connected thereto and to storage canister 10a which is vented through the atmospheric air inlet tube 12a. Canister 10a has a purge line 11a connected thereto and adapted for connection to the air (not shown) of the vehicle engine. Tube 9a is also connected through conduit 13a to the enlarged upper end 5a of the filler neck for recirculating fuel vapor thereto. During filling, the aspirating effects of the liquid fuel flow from the nozzle creates a reduced pressure in the upper end of the tube 5a and draws in air and vapor from 13a into the filler tube 4a and the tank. The air drawn in further increases fuel vaporization. Flow of fuel vapor to the atmosphere through tube 13a can occur if 13a vapor flow is not significantly limited.

*US-A-5,570,672 discloses a fuel evaporative emission treatment system of a similar type having a vent hose connecting a fuel tank and a charcoal canister, and a vent circulation hose connecting the vent hose and a filler neck of the fuel tank. In a first aspect the sectional areas of the vent hose and vent circulation hose are set so that the ratio thereof may be a proper value. The negative pressure produced in the filler neck due to aspiration induced by refueling is cancelled out by the pressure of fuel gas circulated to the filler neck through the vent circulation hose, whereby the internal pressure of the filler neck is controlled to a value appropriately smaller than the atmospheric pressure thus, inflow of the outside air into the filler neck can be suppressed and also the outflow of evaporative fuel gas from the filler neck. In a second aspect a particular orifice is* *provided in the middle of the vent hose for controlling the quantity of recirculated evaporative fuel gases. In a third aspect a flow rate control valve is provided in the vent hose to control the quantity of fuel gas circulated to the filler neck through the vent circulation hose in dependency on the pressure sensed in the filler neck. The filler neck is in the form of a cylindrical tube of constant diameter over the length from the fuel intake opening close to the tank and open to the atmosphere at its intake opening. When using a flow rate control valve a circular restrictor is provided at the intake opening to restrict but not to close the intake opening with the fuel nozzle inserted*.

### BRIEF SUMMARY OF THE INVENTION

The presen invention as claimed in independent claims 1 and 4, respectively, provides a solution to the above-described problem of minimizing the vapor storage capacity of a fuel vapor storage canister in a fuel vapor vent control system particularly for a motor vehicle and more particularly during refueling operations.

The system of the present invention employs a float operated vent valve mounted in the top of the fuel tank with the vent valve outlet connected through a vent line to a storage canister which is adapted for purging and vapor flow into the air inlet of an engine upon engine startup. In the present system, the filler neck of the tank has the upper end enlarged to receive a fuel filler nozzle therein and includes a seal for sealing about the nozzle upon insertion. A recirculation line is connected from the filler neck at a location downstream of the nozzle seal to the vapor line connected to the canister. Thus, during refueling some of the vapor flowing through the float operated vent valve to the canister is recirculated to the fuel filler neck to facilitate flow of the liquid fuel into the tank and minimize the flow to the canister, thereby reducing the quantity of the fuel flow to storage canister during refueling.

### BRIEF DESCRIPTION OF THE DRAWINGS

FIG. 1 is a pictorial schematic of the invention fuel vapor vent system for a motor vehicle fuel tank during refueling;

FIG. 2 is an enlarged view of a portion of FIG. 1;

FIG. 3 is a view similar to FIG. 1 for a prior art system;

FIG. 4 is an enlarged view of a portion of FIG. 3; and,

FIG. 5 is a pictorial schematic of another prior art system.

### DETAILED DESCRIPTION OF THE INVENTION

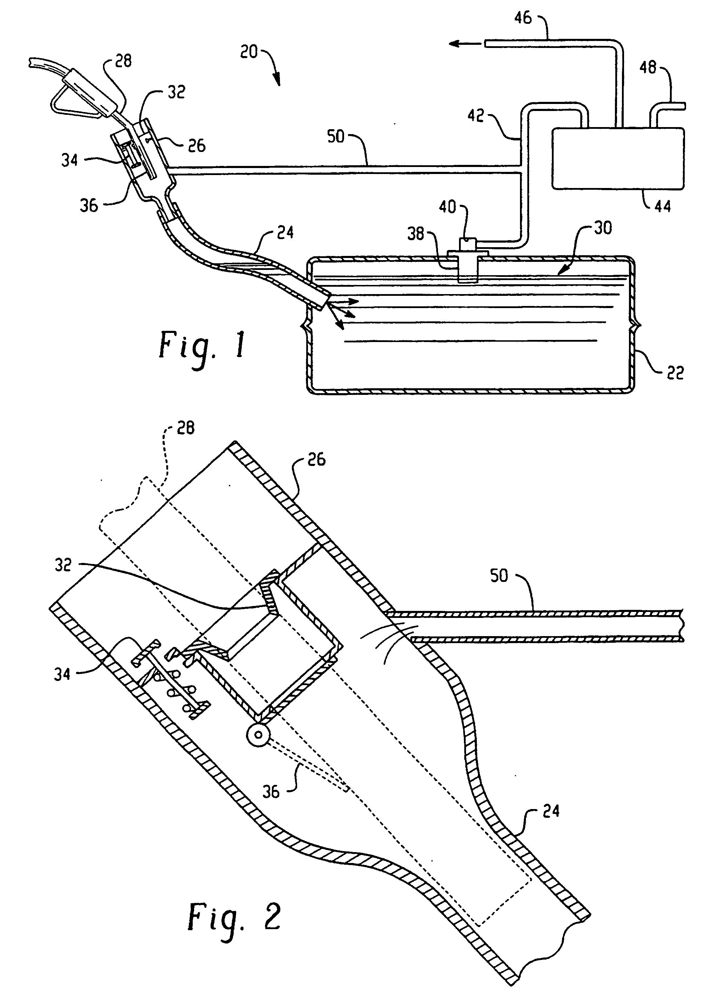

Referring to FIGS. 1 and 2, the system of the present invention is indicated generally at 20 and includes a vehicle fuel tank 22 having a filler neck 24 attached thereto with an enlarged upper end 26 with a refueling filler nozzle 28 received therein for providing flow of fuel indicated by the black arrows into the interior of the tank. The fuel level in the tank is indicated generally at 30. The enlarged portion of the filler neck 26 has disposed therein a mechanical seal 32 which seals about the outer periphery of the nozzle 28 and preferably includes an annular member of elastomeric material as shown in FIG. 2.

The enlarged portion of the filler neck 26 also has a pressure relief valve 34 disposed therein for providing bypass of the seal 32 in the event of nozzle shutoff failure and excessive fuel pressure buildup within the filler neck. Below the seal 32 is disposed an optional one-way flapper valve 36 which is opened by the nozzle 28 upon insertion through the seal 32 as shown in dashed outline in FIG. 2.

The tank 22 has a float operated vent valve 38 disposed in the top wall thereof through an access opening and has a flange 40 thereon registered against the exterior surface of the tank top for attachment thereto and sealing there around in a manner well known in the art. The outlet of the valve 40 is connected through a conduit 42 to the inlet of a vapor storage canister 44 which has a purge line 46 connected thereto which is adapted for connection to the air inlet of an engine (not shown) for enabling flow of vapor therethrough upon engine startup. An atmospheric air inlet 48 is provided in the canister to provide purge flow of air into the canister upon engine startup.

A vapor recirculation line 50 has one end connected to the upper end 26 of the filler neck in a region below or downstream of the mechanical seal 32; and, the opposite end of the line 50 is connected into the vapor purge line 42 for providing recirculation of a portion of the vapor flowing through the line 42. This recirculation is facilitated by the aspiration effect of the flow of the fuel in the filler neck 24 during refueling.

Upon insertion of the filler nozzle 28 into the filler tube upper end 26 and, smaller diameter neck 24, and upon discharge of fuel from nozzle 28, a liquid seal is created between nozzle 28 and the inner periphery of neck 28. This liquid seal entrains recirculated vapor from tube 50 into the tank. It will be understood that the recirculated vapor in tube 50 replaces the amount of air entering the filler neck 24 except for leakage past the mechanical seal 32.

Upon removal of the nozzle and closure of the flapper valve 36, and during engine operation, fuel vapor venting from the tank is through valve 38 and conduit 42 to the canister 44. With the nozzle removed there is no flow-induced recirculation through the conduit 50.

The present invention thus provides a conduit from the canister vent line for recirculation through the filler neck fuel vapors in the tank during refueling and provides a mechanical seal above the recirculation conduit and a liquid seal in the filler neck upon insertion of a refueling nozzle and fuel flow into the filler neck. The system of the invention minimizes the flow to the storage canister during refueling and thus reduces the quantity of vapor the canister must store and permits reducing the canister adsorbent fill and overall canister volume.

Although the invention has hereinabove been described with respect to the illustrated embodiments, it will be understood that the invention is capable of modification and variation and is limited only by the following claims.

## Claims

1. A method of controlling fuel tank vapor venting during refueling comprising:
(a) providing a fuel filler neck (24) on the tank (22) and inserting a fuel filler nozzle (28) in the tank filler neck and mechanically sealing between the nozzle and filler neck;
(b) disposing a vent valve (38) in the upper wall of the tank and connecting a vapor vent line (42) from the vent valve to a vapor storage canister (44); and,
(c) connecting one end of a recirculation line (50) to the filler neck downstream of the mechanical seal (32) and connecting an end opposite the one end to the vapor vent line (42) and recirculating tank vapor during refueling; and, forming a liquid seal between the filler neck and the fuel discharged from the nozzle during refueling.

2. The method defined in claim 1, wherein said step of disposing a vent valve (38) includes disposing a float operated valve.

3. The method defined in claim 1, wherein said step of providing a fuel filler neck includes providing a relief valve (34) for bypassing the mechanical sealing.

4. A tank refueling vapor control system of the type having a vapor storage canister (44), and seal (32) for a refueling nozzle (28) in the tank filler tube comprising:
(a) a vent valve (20) disposed on the tank upper wall and having a vapor vent line (42) therefrom connected to the canister (44);
(b) a recirculation line (50) having one end connected to the filler neck (24) downstream of the nozzle seal (32) and the end opposite the one end connected to the vent line (42) for recirculating vapor during refueling; and
(c) a portion of the filler neck (24) configured to form a liquid seal about fuel discharging from the nozzle for entraining recirculated vapor.

5. The system defined in claim 4, wherein the vent valve (20) is float operated.

6. The system defined in claim 4, wherein the filler neck (24) includes a pressure relief valve (34) for bypassing the nozzle sea (32) in the event of excessive fuel vapor pressure.

7. The system defined in claim 4, wherein the filler neck includes a one-way valve (36) disposed downstream of the mechanical seal (32) and adapted to be opened by insertion of a refueling nozzle.

## Patentansprüche

1. Verfahren zur Steuerung einer Dampfentlüftung eines Kraftstofftanks während einer Betankung, das die Schritte aufweist:
(a) Bereitstellung eines Kraftstoffeinfüllstutzens (24) an dem Tank (22) und Einführung eines Kraftstofffüllmundstücks (28) in den Tankeinfüllstutzen sowie mechanische Abdichtung zwischen dem Mundstück und dem Einfüllstutzen;
(b) Anordnung eines Entlüftungsventils (28) in der oberen Wand des Tanks und Anschluss einer Dampfentlüftungsleitung (42) zwischen dem Entlüftungsventil und einem Dampfspeicherbehälter (44) und
(c) Anschluss eines Endes einer Rückführungsleitung (50) an dem Einfüllstutzen stromabwärts der mechanischen Dichtung (32) und strömungsmäßige Verbindung eines von dem einen Ende entgegengesetzten Endes mit der Dampfentlüftungsleitung (42) sowie Rückführung von Tankdampf während der Betankung; und Bildung einer Flüssigkeitsdichtung zwischen dem Einfüllstutzen und dem während der Betankung aus dem Mundstück abgegebenen Kraftstoff.

2. Verfahren nach Anspruch 1, wobei der Schritt der Anordnung eines Entlüftungsventils (38) die Anordnung eines Schwimmer betätigten Ventils enthält.

3. Verfahren nach Anspruch 1, wobei der Schritt der Bereitstellung eines Kraftstoffeinfüllstutzens die Bereitstellung eines Überdruckventils (34) zur Überbrückung der mechanischen Dichtung enthält.

4. Betankungs-Dampfsteuerungssystem von der Art mit einem Dampfspeicherbehälter (44) und einer Dichtung (32) für ein Füllmundstück (28) in dem Tankeinfüllrohr, wobei zu dem System gehören:
(a) ein Entlüftungsventil (20), das an der oberen Tankwand angeordnet ist und von dem eine Dampfentlüftungsleitung (42) wegführt, die mit dem Behälter (44) strömungsmäßig verbunden ist;
(b) eine Rückführungsleitung (50), dessen ein Ende an den Einfüllstutzen (24) stromabwärts der Mundstückdichtung (32) angeschlossen ist, während das in Bezug auf das eine Ende entgegengesetzte Ende an die Entlüftungsleitung (42) angeschlossen ist, um Dampf während einer Betankung zurückzuführen und
(c) ein Abschnitt des Einfüllstutzens (24), der derart gestaltet ist, um eine Flüssigkeitsdichtung über dem aus dem Mundstück abgegebenen Kraftstoff zur Mitreißung rückgeführten Dampfs zu bilden.

5. System nach Anspruch 4, wobei das Entlüftungsventil (20) durch einen Schwimmer betätigt ist.

6. System nach Anspruch 4, wobei der Einfüllstutzen (24) ein Überdruckventil (34) zur Überbrückung der Mundstückdichtung (32) im Falle eines übermäßigen Kraftstoffdampfdrucks enthält.

7. System nach Anspruch 4, wobei der Einfüllstutzen ein Einwegventil (36) enthält, das stromabwärts der mechanischen Dichtung (32) angeordnet und dazu eingerichtet ist, durch Einführung eines Füllmundstücks geöffnet zu werden.

## Revendications

1. Procédé de contrôle de l'évacuation des vapeurs d'un réservoir de carburant au moment de son ravitaillement comprenant les étapes consistant à :
(a) fournir un goulot de remplissage en carburant (24) sur le réservoir (22) et insérer une buse de remplissage en carburant (28) dans le goulot de remplissage du réservoir et assurer l'étanchéité de façon mécanique entre la buse et le goulot de remplissage ;
(b) disposer une soupape d'évacuation (38) dans la paroi supérieure du réservoir et relier une conduite d'évacuation des vapeurs (42) de la soupape d'évacuation à un réservoir de stockage des vapeurs (44) ; et,
(c) relier une extrémité d'une conduite de recyclage (50) au goulot de remplissage en aval du joint d'étanchéité mécanique (32) et relier une extrémité située à l'opposée de la première extrémité à la conduite d'évacuation des vapeurs (42) et recycler les vapeurs du réservoir durant le ravitaillement ; et, former un joint d'étanchéité liquide entre le goulot de remplissage et le carburant déchargé depuis la buse durant le ravitaillement.

2. Procédé selon la revendication 1, dans lequel ladite étape consistant à disposer une soupape d'évacuation (38) inclut le fait de disposer une soupape à flotteur.

3. Procédé selon la revendication 1, dans lequel ladite étape consistant à fournir un goulot de remplissage en carburant inclut le fait de fournir une soupape de décharge (34) afin de dériver l'étanchéité mécanique.

4. Système de contrôle des vapeurs de ravitaillement d'un réservoir du type comportant un réservoir de stockage de vapeurs (44), et un joint d'étanchéité (32) pour une buse de ravitaillement (28) dans le tube de remplissage comprenant :
(a) une soupape d'évacuation (20) disposée sur la paroi supérieure du réservoir et comportant une conduite d'évacuation des vapeurs (42) reliée de là au réservoir (44) ;
(b) une conduite de recyclage (50) ayant une extrémité reliée au goulot de remplissage (24) en aval du joint d'étanchéité de la buse (32) et l'extrémité située à l'opposé de la première extrémité reliée à la conduite d'évacuation (42) afin de recycler les vapeurs durant le ravitaillement ; et
(c) une partie du goulot de remplissage (24) configurée pour former un joint d'étanchéité liquide autour de la décharge de carburant depuis la buse visant à entraîner les vapeurs recyclées.

5. Système selon la revendication 4, dans lequel la soupape d'évacuation (20) est à flotteur.

6. Système selon la revendication 4, dans lequel le goulot de remplissage (24) inclut une soupape de décharge (34) permettant de dériver le joint d'étanchéité de la buse (32) dans l'éventualité d'une pression de vapeur de carburant excessive.

7. Système selon la revendication 4, dans lequel le goulot de remplissage inclut une soupape de retenue (36) disposée en aval du joint d'étanchéité mécanique (32) et adaptée pour être ouverte par insertion d'une buse de ravitaillement.
